# FASCICULE DE BREVET EUROPEEN

(11) **EP 0 562 197 B1**
(45) Date de publication et mention de la délivrance du brevet: **20.08.1997**
(21) Numéro de dépôt: 92400829.5
(22) Date de dépôt: 26.03.1992
(51) Int. Cl.: B65G 61/00, B65G 47/90

(54) **Procédé et dispositif pour palettiser des colis**
Verfahren und Vorrichtung zum Palettieren von Paketen
Method and device for palletizing parcels

(43) Date de publication de la demande: 29.09.1993
(73) Titulaire: CETEC INDUSTRIE, F-24430 Razac sur l'Isle (FR)
(72) Inventeur: Labrue, Jean Claude, F-24460 Chateau l'Evèque (FR)
(74) Mandataire: Hammond, William

(56) Documents cités:
- EP-A- 0 131 555
- FR-A- 1 577 343
- FR-A- 2 673 922
- FR-E- 71 150
- US-A- 3 312 357

## Description

La présente invention concerne un procédé et un dispositif pour palettiser des colis, c'est-à-dire pour déposer des colis sur une palette selon une disposition précise, et couche après couche, jusqu'à obtenir la hauteur souhaitée, le mot "colis" désignant ici tous les objets, tels des cartons, des caisses, des sacs, des fardeaux, des liasses ou similaires qui peuvent constituer une charge stable sur une palette.

Dans la technique connue, les colis sont déposés sur la palette au moyen d'une tête de dépose qui est susceptible de saisir les colis et de les déposer dans la position souhaitée, du fait qu'elle est mobile avec trois degrés de liberté, c'est-à-dire en pouvant coulisser dans deux directions horizontales perpendiculaires entre elles et tourner autour d'un axe vertical.

Il est connu d'autre part de déposer les colis, non point directement sur la palette elle-même, mais sur ce que l'on appelle une fausse palette qui est destinée à recevoir une seule couche de colis et qui est généralement constituée par deux plaques horizontales pouvant s'écarter l'une de l'autre par coulissement horizontal afin de laisser tomber les colis qu'elle contient sur la couche supérieure des colis déjà déposés sur la palette proprement dite. Cette dernière peut descendre à chaque fois d'une hauteur égale à la hauteur d'une couche de colis, afin que le niveau supérieur de la charge déjà déposée reste invariable et situé juste au-dessous du niveau du fond de la fausse palette, et que les colis quittant la fausse palette ne tombent que d'une très faible hauteur.

Actuellement, chaque colis est amené verticalement depuis le bas sur une grille située à côté de la palette, et il pénètre dans la tête de dépose par le fond de celle-ci qui est ouvert à ce moment. On ferme ensuite la tête de dépose, on escamote la grille qui amène les colis, et on déplace la tête de dépose avec le colis jusqu'à l'endroit voulu au-dessus de la palette ou de la fausse palette sur laquelle le colis est finalement déposé par ouverture du fond de la tête de dépose.

De tels dispositifs et procédés de l'art antérieur sont notamment décrits dans les documents US-A-3.312.357 et EP-A-131.555.

Cette façon de procéder entraîne des pertes de temps considérables, et le but de la présente invention est de proposer un procédé et un dispositif du genre spécifié plus haut qui évitent cet inconvénient et qui, pour ce faire, font appel à des moyens simples, fiables et peu coûteux.

Ce but est atteint par un procédé selon la revendication 1 et par un dispositif selon la revendication 2.

On supprime ainsi la nécessité d'amener les colis depuis le bas sur une grille et d' ouvrir la tête de dépose pour qu'elle puisse recevoir le colis, puisque ce dernier pénètre latéralement dans la tête de dépose par un côté de celle-ci sans rencontrer aucun obstacle, ce qui gagne un temps considérable et simplifie les mécanismes d'amenée des colis.

S'il est parfaitement possible d'introduire chaque colis dans la tête de dépose à une vitesse normale, par exemple en le poussant au moyen d'un vérin ou en l'acheminant par un convoyeur, de telle manière que son bord antérieur vienne s'arrêter juste avant l'extrémité arrière de la tête de dépose, il s'est avéré particulièrement avantageux d'imprimer à chaque colis une forte accélération avant son introduction dans la tête de dépose où il est arrêté dans sa progression par un dispositif de butée approprié.

Ceci revient à projeter plus ou moins brutalement les colis dans la tête de dépose et, de manière surprenante, l'expérience montre que cette simple disposition, bien loin de poser des problèmes dus par exemple aux rebonds des colis ou aux chocs subis par la tête de dépose, assure un meilleur positionnement des colis et diminue encore les temps morts.

Il faut noter en outre que le procédé selon l'invention s'applique aussi bien au cas où les colis sont déposés directement sur la palette qu'à celui où l'on fait appel à une fausse palette dont le mode de fonctionnement a été décrit plus haut.

Un dispositif avantageux pour la mise en oeuvre de ce procédé est caractérisé par les les caractéristiques définies dans la revendication 2.

On comprend que les colis peuvent être introduits latéralement dans une telle tête de dépose pour reposer sur le fond ouvrant de celle-ci, ce dernier pouvant être avantageusement constitué par deux moitiés qui sont articulées autour d'axes horizontaux solidaires de la partie supérieure de la tête de dépose. L'ouverture s'effectue alors en écartant l'une de l'autre ces deux moitiés de fond par pivotement vers l'extérieur.

De préférence, la tête preneuse selon l'invention comporte également des bras articulés de guidage latéral pouvant s'écarter vers l'extérieur lors de l'introduction d'un colis et se rabattre ensuite sur ce dernier pour le maintenir en position lors de l'ouverture du fond qui produit la dépose.

Avantageusement, les moyens qui sont prévus dans le dispositif selon l'invention pour amener les colis à palettiser l'un après l'autre à la tête preneuse comprennent, immédiatement en amont de cette dernière, un convoyeur d'accélération à vitesse élevée qui projette chaque colis dans la tête de dépose, au lieu qu'il soit poussé dans celle-ci, par exemple par un vérin, ou qu'il provienne d'un convoyeur qui le laisse mourir sur son erre. Pour éviter que le colis ainsi projeté ne sorte de la tête de dépose, celle-ci comporte également une butée d'arrêt des colis sur son côté opposé à son côté ouvert, donc sur son côté opposé au dispositif d'amenée des colis.

Dans une forme de réalisation préférée, les moyens pour amener les colis à palettiser à la tête preneuse comprennent, en amont du convoyeur d'accélération spécifié ci-avant, un convoyeur incliné vers le bas dans la direction de déplacement et à descente libre, ainsi qu'un dispositif commandé de blocage des colis sur ce convoyeur. Grâce à cette disposition, les colis arrivant successivement sur ce dernier, lequel peut être par exemple un convoyeur à rouleaux fous, peuvent être bloqués durant le temps qui est nécessaire pour la dépose du colis précédent.

Le dispositif de blocage spécifiée plus haut pourrait être constitué par une simple butée qui s'effacerait de manière asservie, mais, dans une forme de réalisation préférée, il comprend un vérin disposé au-dessus du convoyeur et agissant perpendiculairement à celui-ci pour serrer le colis concerné sur le convoyeur en le bloquant de cette manière. Bien entendu, ce vérin est commandé au moyen d'un dispositif d'asservissement d'un type connu généralement quelconque qui permet de libérer les colis un à un dès que le colis précédent a été déposé.

Comme on l'a dit plus haut, le dispositif selon l'invention peut être utilisé pour déposer des colis directement sur une palette, mais il peut également comprendre une fausse palette escamotable sur laquelle les colis sont déposés par la tête de dépose, cette fausse palette étant disposée au-dessous de la tête de dépose et au-dessus de la palette proprement dite et étant munie de rives de maintien des colis.

La description qui va suivre, et qui ne présente aucun caractère limitatif, permettra de bien comprendre comment la présente invention peut être mise en pratique. Elle doit être lue en regard des dessins annexés, parmi lesquels :
La figure 1 représente une vue de dessus du dispositif de palettisation selon la présente invention ;
La figure 2 montre une vue en coupe longitudinale du dispositif de la figure 1, prise selon la ligne II-II de cette figure ; et :
La figure 3 représente une vue en coupe transversale schématique et partielle de la tête de dépose du dispositif selon l'invention, prise selon la ligne III-III de la figure 2.

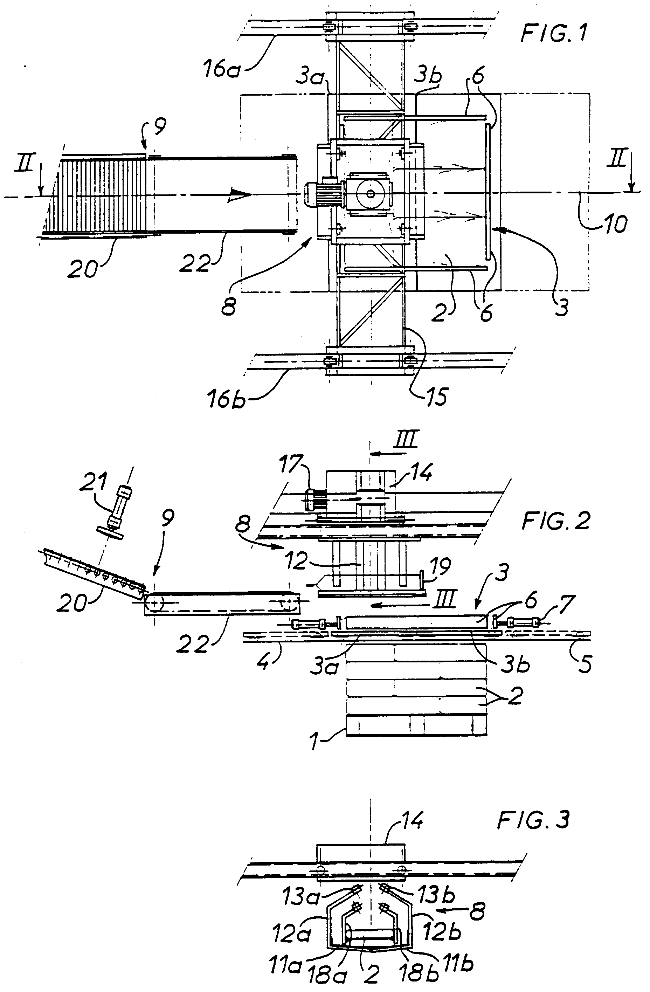

Dans ce qui suit, on supposera que ce dispositif se trouve dans sa position normale d'utilisation, telle qu'elle est représentée par exemple sur la figure 2, ce qui donne tout leur sens à des expressions comme "supérieur" et "inférieur".

Cela étant, ce dispositif est destiné à empiler sur une palette 1 des colis 2 imbriqués les uns par rapport aux autres en couches successives comme le montre la figure 2. De manière connue, on utilise à cette fin une fausse palette qui est désignée dans son ensemble par le repère 3 sur les figures 1 et 2, qui est disposée au-dessus de la palette 1 proprement dite et des colis 2 supportés par celle-ci, et dont le niveau est fixe, tandis que la palette 1 descend au fur et à mesure que les couches de colis 2 se constituent.

La fausse palette 3 comprend deux plaques de fond 3a et 3b qui sont mobiles sur des rails horizontaux 4 grâce à des galets 5. Ces plaques 3a et 3b sont juxtaposées lors du chargement d'une couche de colis, mais, lorsque l'on veut déposer cette couche sur la couche supérieure des colis déjà déposés sur la palette proprement dite 1, elles peuvent s'écarter l'une de l'autre grâce à des moyens non représentés pour prendre la position indiquée en traits mixtes sur les figures 1 et 2. Lors de ce déplacement des plaques 3a et 3b, la couche de colis placée sur elles est déposée sur la couche supérieure de colis de la palette 1 qui descend d'une hauteur égale à celle d'une couche pour être prête à recevoir la couche suivante. En outre, la fausse palette 3 est munie sur ses quatre côtés de rives 6 mines par des vérins 7 qui permettent de positionner correctement les colis déposés sur elle et de les maintenir pendant l'ouverture des plaques 3a et 3b.

Le chargement de la fausse palette 3 se fait au moyen d'une tête de dépose 8 qui reçoit latéralement les colis provenant d'un dispositif d'amenée désigné dans son ensemble par le repère 9. Cette tête 8 est une sorte de nacelle qui est symétrique par rapport à un plan vertical 10 parallèle à la direction d'amenée des colis. Comme on le voit notamment sur la figure 3, elle comprend un fond constitué par deux plaques symétriques 11a et 11b qui sont légèrement inclinées vers le centre et vers le bas et dont les extrémités extérieures sont reliées par des paires de demi-arceaux respectives 12a et 12b à un axe de pivotement horizontal 13a et 13b, respectivement. Le pivotement vers l'extérieur des paires de demi-arceaux 12a et 12b ouvre le fond de la tête de dépose 8 et permet de déposer le colis contenu dans cette dernière sur la fausse palette 3.

Les axes de pivotement 13a et 13b des paires de demi-arceaux 12a et 12b qui portent le fond de la tête de dépose 8 sont solidaires d'un chariot 14 qui peut se déplacer perpendiculairement au plan 10 sur une poutre transversale 15, laquelle est à son tour mobile dans le sens longitudinal du fait que ses extrémités peuvent rouler sur des rails 16a et 16b parallèles au plan 10. Il en résulte que la tête de dépose 8 peut se déplacer selon deux directions perpendiculaires dans un plan horizontal. Elle peut également tourner autour d'un axe vertical grâce à un motoréducteur 17, de sorte qu'elle dispose de trois degrés de liberté au sens indiqué plus haut. Ses déplacements sont commandés à partir d'un programme approprié, et ils sont réalisés au moyen de dispositifs d'entraînement classiques non représentés, ce qui permet de déposer un colis à l'endroit voulu sur la fausse palette 3 en ouvrant les plaques de fond 11a et 11b de la tête de dépose 8.

Cette tête 8 est complétée par deux paires de bras de guidage latéral 18a et 18b en forme de demi-arceaux qui sont également montées pivotantes à leur extrémité supérieure sur le chariot 14. Ces bras de guidage 18a et 18b sont rabattus sur le colis qui a été projeté dans la tête de dépose 8 par le dispositif d'amenée 9, afin de le maintenir lors de l'ouverture des plaques de fond 11a et 11b, et ils sont actionnés de manière également programmée au moyen de dispositifs non représentés.

Enfin, une butée transversale 19 est montée à l'arrière de la tête de dépose 8, c'est-à-dire sur son côté opposé au dispositif d'amenée 9, afin d'arrêter les colis projetés par ce dernier à l'intérieur de la tête de dépose 8.

Le dispositif d'amenée 9 comprend un convoyeur incliné à rouleaux fous 20 au-dessus duquel est monté un vérin de blocage 21 dont la direction d'action est perpendiculaire au convoyeur 20. Grâce à un dispositif de commande non représenté, le vérin 21 peut serrer un colis contre le convoyeur 20 et l'immobiliser jusqu'à ce que le colis précédent ait été déposé sur la fausse palette 3 par la tête de dépose 8.

Entre le convoyeur d'attente ou d'accumulation 20 et la tête de dépose 8 se trouve un convoyeur d'accélération horizontal 22 dont la surface est réalisée en un matériau antidérapant et qui est entraîné par des moyens non représentés à une vitesse assez importante pour que le colis soit littéralement projeté dans la tête de dépose 8. Bien entendu, la surface supérieure du convoyeur 22 est de niveau avec le fond de la tête de dépose 8.

Pour résumer, les colis arrivent par le convoyeur incliné 20 et ils sont immobilisés l'un après l'autre par le vérin 21. Dès que le colis précédent a été déposé sur la fausse palette 3, le colis suivant est libéré par le vérin 29, il passe sur le convoyeur d'accélération 22 où une vitesse élevée lui est communiquée, et il est projeté dans la tête de dépose 8 dont les paires de bras de guidage 18a, 18b sont ouvertes, ce qui veut dire qu'elle ont pivoté vers l'extérieur, et dont le fond constitué par les plaques 11a, 11b est fermé.

Les bras de guidage 18a, 18b se rabattent alors vers l'intérieur, la tête de guidage 8 se place à l'endroit voulu grâce à des déplacements programmés, et son fond s'ouvre par pivotement vers l'extérieur des plaques 11a et 11b autour des axes 13a, 13b. Le colis est ainsi déposé sur la fausse palette 3 et, s'il est le dernier d'une couche, on dépose celle-ci sur la couche supérieure de colis de la palette proprement dite 1, ainsi que cela à été expliqué plus haut, par le déplacement vers l'extérieur des deux plaques 3a et 3b qui constituent le fond de la fausse palette 3.

Les moyens mécaniques, hydrauliques, électriques et/ou électroniques qui permettent de déclencher, de réaliser et d'arrêter les déplacements des divers dispositifs décrits plus haut sont à la portée des spécialistes en la matière, et ils ne seront pas explicités ici.

Il va de soi que de nombreuses modifications pourraient être apportées à la forme de réalisation qui vient d'être déorite. C'est ainsi que la fausse palette 3 pourrait être supprimée. D'autre part, et afin d'éviter l'arrêt de la dépose pendant que la fausse palette 3 est ouverte, la tête 8 pourrait alors déposer les colis sur les plaques 3a et 3b écartées l'une de l'autre de cette fausse palette 3 qui se trouveraient alors dans la position représentée en traits mixtes sur les figures 1 et 2. Le rapprochenent ultérieur des plaques 3a et 3b reconstituerait la fausse palette 3 et le processus pourrait alors se poursuivre de la manière indiquée plus haut. Enfin, le convoyeur d'amenée incliné 20 pourrait être supprimé dans le cas où la cadence des opérations est relativement faible.

## Revendications

1. Procédé pour palettiser des colis au moyen d'une tête de dépose (8) mobile à fond ouvrant, lesdits colis étant amenés par des moyens (9) et introduits l'un après l'autre dans ladite tête de dépose (8) ouverte sur son côté qui fait face auxdits moyens (9) d'amenée des colis à palettiser (2) et une forte accélération étant imprimée auxdits colis avant leur introduction dans ladite tête de dépose qui peut être déplacée avec trois degrés de liberté pour amener le colis à l'endroit choisi pour être déposé en fonction du schéma de palettisation à réaliser, caractérisé par le fait que lesdits moyens (9) pour amener les colis à palettiser (2) à ladite tête de dépose (8) comprennent, en amont dudit convoyeur d'accélération, un convoyeur incliné vers le bas dans la direction du déplacement et à descente libre (20) et un dispositif commandé (21) pour bloquer les colis (2) sur ledit convoyeur à descente libre (20).

2. Dispositif pour la mise en oeuvre du procédé selon la revendication 1, caractérisé par le fait que ledit dispositif commandé pour bloquer les colis (2) sur ledit convoyeur à descente libre (20) comprend un vérin (21) disposé au-dessus de ce dernier et agissant perpendiculairement à lui sur les colis à bloquer (2).

3. Dispositif selon l'une quelconque des revendications 1 à 2, caractérisé par le fait qu'il comprend une fausse palette escamotable (3) sur laquelle lesdits colis (2) sont déposés par la tête de dépose (8), fausse palette qui est disposée au-dessous de cette dernière et au-dessus de la palette proprement dite (1) et qui est munie de rives (6) pour le maintien des colis (2).

4. Dispositif selon la revendication 1, caractérisé par le fait que ledit fond ouvrant est constitué par deux moitiés (11a, 11b) qui sont articulées autour d'axes horizontaux solidaires de la partie supérieure de ladite tête de dépose (8).

5. Dispositif selon la revendication 4, caractérisé par le fait que ladite tête de dépose (8) comporte également des bras articulés de guidage latéral (18a, 18b) pouvant s'écarter vers l'extérieur.

6. Dispositif selon l'une quelconque des revendications 1 à 5, caractérisé par le fait que lesdits moyens (9) pour amener les colis à palettiser (2) l'un après l'autre à ladite tête de dépose (8) comprennent, immédiatement en amont de cette dernière, un convoyeur d'accélération à vitesse élevée (22), et par le fait que ladite tête de dépose (8) comporte en outre une butée d'arrêt des colis (19) sur son côté opposé audit convoyeur d'accélération (22).

## Claims

1. A method of palletising packages by means of a mobile deposition head (8) having an openable bottom, said packages being fed by feed means (9) and introduced one after the other into the said deposition head (8), which is open on the side facing the said feed means (9) for feeding packages (2) to be palletised, and a high acceleration being imparted to the said packages before they are introduced into the said deposition head, which can move with three degrees of freedom to feed the packages to the selected location to be deposited in accordance with the palletising scheme to be implemented, characterised in that the said feed means (9) for feeding the packages (2) to be palletised to the said deposition head (8) include, upstream of the said accelerator conveyor, a free descent conveyor (20) inclined downwards in the direction of movement and a control device (21) for immobilising the packages (2) on the said free descent conveyor (20).

2. A device for implementing the method according to claim 1 characterised in that the said selectively operated device for immobilising the packages (2) on the said free descent conveyor (20) comprises a ram (21) disposed over the conveyor and operating perpendicularly to it on the packages (2) to be immobilised.

3. A device according to claim 1 or claim 2 characterised in that it includes a retractable dummy pallet (3) on which the said packages (2) are deposited by the deposition head (8), which dummy pallet is disposed under the latter head and over the pallet (1) proper and is provided with lips (6) for holding the packages (2) in place.

4. A device according to claim 1 characterised in that the said openable bottom comprises two halves (11a, 11b) hinged about horizontal shafts attached to the top part of the said deposition head (8).

5. A device according to claim 4 characterised in that the said deposition head (8) also comprises hinged lateral guide arms (18a, 18b) that can move apart outwardly.

6. A device according to any one of claims 1 to 5 characterised in that the said feed means (9) for feeding the packages (2) to be palletised one after the other to the said deposition head (8) comprise a high speed accelerator conveyor (22) immediately upstream of the latter head and in that the said deposition head (8) further includes an abutment (19) for stopping the packages on the side opposite the said accelerator conveyor (22).

## Patentansprüche

1. Verfahren zum Palettieren von Stückgut mittels eines beweglichen Positionierkopfes (8) mit zu öffnendem Boden, wobei die Stückgüter durch eine Vorrichtung (9) zugeführt und stückweise in den Positionierkopf (8) eingebracht werden, der an der der Vorrichtung (9) zur Zuführung der zu palettierenden Stückgüter (2) zugewandten Seite offen ist, und wobei eine starke Beschleunigung auf die Stückgüter aufgebracht wird, bevor diese in den Positionierkopf (8) eingebracht werden, der mit drei Freiheitsgraden der Bewegung versetzt werden kann, um das Stückgut an den gewünschten Ort zum Absetzen in Abhängigkeit des zu realisierenden Absetzprogrammes zu bringen, **dadurch gekennzeichnet**, daß die Vorrichtung (9) zur Zuführung der zu palettierenden Stückgüter (2) zu dem Positionierkopf (8) versehen ist mit einem in Transportrichtung vor dem Beschleunigungsförderer angeordneten Förderer zum freien Transport (20), der in Bewegungsrichtung zum Boden geneigt ist, und einer gesteuerten Vorrichtung (21) zum Blockieren der Stückgüter auf dem Förderer zum freien Transport (20).

2. Vorrichtung zur Durchführung des Verfahrens gemäß Anspruch 1, **dadurch gekennzeichnet**, daß die gesteuerte Vorrichtung zum Blockieren der Stückgüter (2) auf dem Förderer zum freien Transport (20) eine Spindel (21) aufweist, die oberhalb von letzteren angeordnet ist und senkrecht zu diesem auf die zu blockierenden Stückgüter (2) betätigbar ist.

3. Vorrichtung gemäß Anspruch 1 oder 2, **dadurch gekennzeichnet**, daß diese eine verschiebbare Blindpalette (3) aufweist, auf welcher die Stückgüter (2) angeordnet werden durch den Positionierkopf (8), wobei die Blindpalette, die unterhalb von dem letzterem und oberhalb der eigentlichen Palette (1) angeordnet ist, mit Rändern (6) zum Halten der Stückgüter (2) versehen ist.

4. Vorrichtung gemäß Anspruch 1, **dadurch gekennzeichnet**, daß der zu öffnende Boden zwei Hälften (11a, 11b) aufweist, die durch Drehung um horizontale Achsen zusammengefügt werden, die mit dem oberen Teil des Positionierkopfes (8) verbunden sind.

5. Vorrichtung gemäß Anspruch 4, **dadurch gekennzeichnet**, daß der Positionierkopf (8) des weiteren versehen ist mit gelenkig angeordneten Armen zur seitlichen Führung (18a, 18b), die nach außen ausschwenkbar sind.

6. Vorrichtung gemäß einer der Ansprüche 1 bis 5, **dadurch gekennzeichnet**, daß die Vorrichtung (9) zur stückweisen Zuführung der zu palettierenden Stückgüter (2) zu dem Positionierkopf (8) mit einem Förderer (22) zur Beschleunigung auf eine erhöhte Geschwindigkeit versehen ist, der unmittelbar oberhalb des Positionierkopfes (8) angeordnet ist, und daß der Positionierkopf (8) mit einem Halteanschlag (19) auf der dem Förderer (22) zur Beschleunigung gegenüberliegenden Seite versehen ist.
